# FASCICULE DE BREVET EUROPEEN

(11) **EP 2 804 750 B1**
(45) Date de publication et mention de la délivrance du brevet: **29.06.2016**
(21) Numéro de dépôt: 13700322.4
(22) Date de dépôt: 17.01.2013
(51) Int. Cl.: B29L 30/00, B29C 53/04

(54) **DISPOSITIF ET PROCEDE DE RETOURNEMENT DES LISIERES SUR UNE CALANDRE**
VORRICHTUNG UND VERFAHREN ZUM WENDEN VON KANTEN AUF EINEM KALANDER
DEVICE AND METHOD FOR TURNING SELVEDGES ON A CALENDER

(30) Priorité: 19.01.2012 FR 1250551
(43) Date de publication de la demande: 26.11.2014
(73) Titulaire: Compagnie Générale des Etablissements Michelin, 63000 Clermont-Ferrand (FR); MICHELIN Recherche et Technique S.A., 1763 Granges-Paccot (CH)
(72) Inventeur: HEINTZE, David, Greenville, South Carolina 29605 (US)
(74) Mandataire: Noel, Luminita
(86) Numéro de dépôt international: PCT/EP2013/050774
(87) Numéro de publication internationale: WO 2013/107786

(56) Documents cités:
- EP-A2- 1 577 121
- DE-A1-102006 014 142

## Description

L'invention concerne le domaine de la fabrication des articles en caoutchouc destinés par exemple à constituer les éléments de renfort d'un pneumatique.

Ces éléments de renfort sont constitués, en règle générale, par des tronçons de fils de renfort enrobés dans du caoutchouc, lesdits tronçons étant parallèles entre eux et faisant un angle donné avec la direction circonférentielle du pneumatique. Ainsi, dans un pneumatique à carcasse radiale, les fils de renfort carcasse font un angle de 90° avec la direction circonférentielle. De même les nappes de renfort constituant la ceinture sommet sont constituées de fils de renfort faisant un angle compris entre 25° et 45° avec la direction circonférentielle. Enfin les nappes de frettage, lorsqu'elles ne sont pas obtenues à partir de bandes continues enroulées sur plusieurs tours, sont formées de tronçons de fils de renfort enroulés sur un ou deux tours et formant un angle nul avec la direction circonférentielle.

De manière largement répandue dans l'industrie du pneumatique, ces différents composants sont eux-mêmes réalisés à partir de la découpe de nappes continues, formées de fils de renfort continus enrobés dans du caoutchouc, parallèles entre eux, et faisant un angle nul avec la direction longitudinale de ladite nappe continue, encore dénommée nappe droit fil.

Le document DE 102006014142- A1 divulgue un dispositif de calandrage comprenant au moins deux cylindres de calandrage formant un entrefer destiné à recevoir une nappe continue de fils de renfort intercalée entre deux feuilles continues de caoutchouc.

La fabrication d'une nappe droit fil se fait en règle générale à l'aide d'une calandre comprenant au moins deux cylindres de calandrage rotatifs, dans l'entrefer desquels circulent une nappe de fils de renfort continus régulièrement espacés les uns des autres, intercalée entre deux feuilles continues de caoutchouc. En passant dans l'entrefer des cylindres de calandrage, les feuilles de caoutchouc sont pressées l'une contre l'autre et viennent nourrir les espaces compris entre les fils de renfort de manière à former un ensemble composite de fils de renfort et de caoutchouc.

Pour assurer une bonne distribution de la matière, les feuilles de caoutchouc ont une largeur légèrement supérieure à la largeur de la nappe de fils de renfort. Il en résulte la formation de lisières latérales au droit desquelles les feuilles de caoutchouc n'emprisonnent aucun fil. Aussi, il est prévu, en aval des moyens de calandrage, un dispositif de coupe et de recyclage des lisières, de manière à ramener la nappe de composite à la largeur précise de la nappe de fil de renfort.

On observe toutefois que la mise en pression l'une contre l'autre des feuilles de caoutchouc au droit des lisières se fait de manière imparfaite en raison tout simplement de l'absence du volume de fils de renfort dans cette zone. Cette mise en pression imparfaite a pour effet une mauvaise cohésion des feuilles de gomme au niveau des lisières, ce qui entraine des irrégularités au niveau du dispositif de coupe destiné à détacher les lisières.

L'invention a pour objet d'apporter une solution originale à ce problème.

L'invention se réfère à un dispositif de calandrage comme defini dans la revendication 1.

Le procédé de calandrage d'une nappe continue de fils de renfort selon l'invention comprend les étapes au cours desquelles :
- on dispose ladite nappe de fils de renfort entre une feuille supérieure continue de caoutchouc et une feuille inférieure continue de caoutchouc, lesdites feuilles de caoutchouc ayant une largeur supérieure à la largeur de la nappe de fils de renforts, de sorte que les deux parties latérales desdites feuilles de caoutchouc non situées au droit de la nappe de fils de renfort forment des lisières
- on introduit l'ensemble constitué à l'étape précédente dans l'entrefer d'une calandre comprenant au moins deux cylindres, de manière à faire pénétrer le caoutchouc dans les espaces entre les fils de renfort.

Ce procédé se caractérise en ce que, préalablement à l'introduction de la nappe de fils de renfort et des feuilles de caoutchouc dans l'entrefer de la calandre, on replie sur elles-mêmes les deux lisières d'au moins une des feuilles de caoutchouc, comme défini dans la revendication 9.

Des formes préferentielles de l'invention sont définies dans les revendications dépendantes.

En retournant la lisière sur elle-même, on augmente l'épaisseur de matière pénétrant dans l'entrefer de la calandre au niveau de la lisière elle-même, et on favorise la mise en pression des lisières des feuilles supérieure et inférieure l'une contre l'autre lors du passage dans l'entrefer de la calandre.

A la sortie de l'entrefer les lisières de l'assemblage sont parfaitement formées, et la découpe des lisières au plus près des fils de renfort positionnés aux deux extrémités transversale de la nappe se fait de manière précise et régulière.

On observe également qu'en venant nourrir les volumes placés aux extrémités transversales de la nappe de fils de renfort, on améliore la qualité du pont de gomme formé entre les fils de renfort à ce niveau précis.

Avantageusement, on découpe les lisières latérales en aval de l'entrefer formé par les cylindres de la calandre.

Avantageusement on forme le pli des lisières au niveau de leurs demi-largeurs respectives.

Avantageusement, la nappe de fils de renfort est formée par des fils de renfort parallèles entre eux et formant un angle nul avec la direction longitudinale de ladite nappe.

L'invention concerne également des dispositifs de retournement originaux, formés par des disques de retournement rotatifs, disposés axialement de part et d'autre de l'équateur d'un cylindre de calandrage. Chacun des disques de retournement comporte une surface conique dont les génératrices forment un angle donné par rapport à l'axe de rotation du disque de retournement, et dans lequel ledit disque de retournement est installé de sorte que la partie radialement distale de la surface conique du disque de retournement soit sensiblement tangente à la surface du cylindre de calandrage sans rentrer en contact avec la dite surface.

On entend ici par sensiblement tangent sans rentrer en contact, le fait que les génératrices de la surface conique sont perpendiculaire à un rayon du cylindre passant par le point radialement distal du disque de retournement, et que ce point est distant de la surface dudit cylindre d'un jeu très faible compris avantageusement entre 0,1 mm et 1 mm.

En faisant circuler la feuille de gomme autour du cylindre et en déplaçant axialement les disques de retournement jusqu'à leur mise en contact avec chacune des lisières, on soulève lesdites lisières et, sous l'effet de la rotation du disque on force ladite lisière à se replier sur elle-même en direction de l'équateur du cylindre de calandrage.

Avantageusement, l'angle formé par une génératrice de la surface conique avec l'axe de rotation du disque de retournement peut être compris entre 70° et 80°.

Avantageusement, le diamètre d'un disque de retournement peut être compris entre 15 cm et 25 cm.

Avantageusement les axes de rotation des disques de retournement sont sensiblement perpendiculaires à l'axe de rotation du cylindre.

Avantageusement, la position des moyens de retournement est ajustable dans une direction parallèle à l'axe des cylindres.

Lorsque l'on utilise des disques de retournement selon l'invention sur une calandre le procédé prévoit avantageusement les étapes au cours desquelles :
- en amont de l'entrefer de la calandre, on fait circuler une feuille de caoutchouc autour d'un des cylindres de calandrage,
- on approche axialement les disques de retournement en rotation de chacune des lisières, de sorte que les lisières sont soulevées par le disque de retournement et se replient sur elles-mêmes en direction de l'équateur du cylindre sous l'effet de la rotation dudit disque de retournement.

Avantageusement, les disques de retournement sont animés en rotation de sorte que la vitesse tangentielle au niveau de la partie radialement distale des disques de retournement soit dirigée sensiblement parallèlement à l'axe du cylindre en direction de l'équateur dudit cylindre.

Avantageusement, les disques de retournement sont animés en rotation de sorte que la vitesse circonférentielle au niveau de la partie radialement distale des disques de retournement soit supérieure à la vitesse circonférentielle dudit cylindre de calandrage.

Avantageusement, on pourra mettre en oeuvre les dispositifs de retournement sur une calandre comprenant deux cylindres additionnels coopérant respectivement avec chacun des deux cylindres de calandrage et formant avec chacun de ces cylindres un entrefer supérieur et un entrefer inférieur destinés chacun à réaliser une feuille de caoutchouc en continue. Auquel cas, les moyens de retournement seront disposés en aval de l'entrefer supérieur ou inférieur.

La description qui suit s'appuie sur les figures 1 à 5 dans lesquelles :
- la figure 1 représente une vue schématique de face d'un dispositif de calandrage selon l'art antérieur connu,
- la figure 2 représente une vue schématique de face de la calandre en amont de l'entrefer situé entre les deux cylindres de calandrage,
- la figure 3 représente une vue schématique de face de la calandre en sortie de l'entrefer situé entre les deux cylindres de calandrage,
- la figure 4 représente une vue schématique de cote d'un dispositif de calandrage comprenant un dispositif de retournement selon l'invention,
- la figure 5 représente une vue schématique du dispositif de retournement selon l'invention.

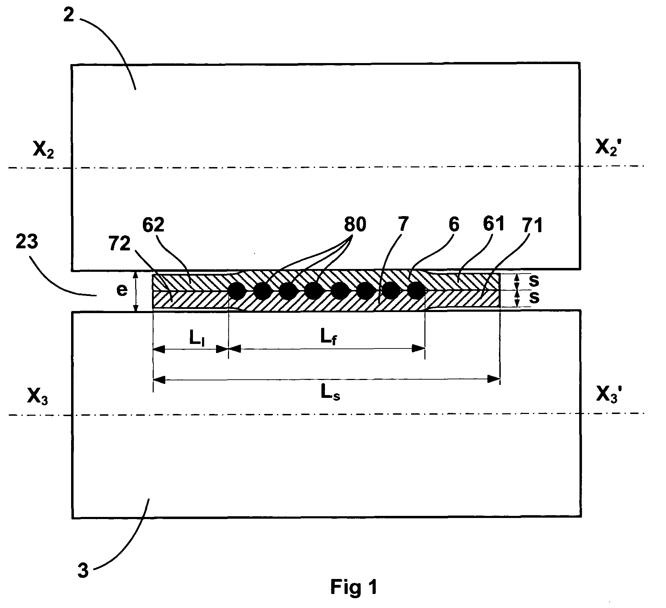

Le dispositif de calandrage représenté à la figure 1 comprend deux cylindres de calandrage 2 et 3 dont les axes, respectivement X₂X₂' et X₃X₃', sont sensiblement parallèles entre eux.

L'espace entre les deux cylindres définit un entrefer 23, dans lequel circulent une feuille de gomme continue supérieure 6, et une feuille de gomme continue inférieure 7. Une nappe de fils de renfort 80 est prise en sandwich entre les deux feuilles de caoutchouc, et la pression engendrée par les cylindres au niveau de l'entrefer, force la gomme à pénétrer dans les espaces libres situés entre les fils de renfort de manière à former, en aval de l'entrefer, un produit composite dans lequel les fils de renfort sont enrobés de caoutchouc.

On notera ici que la nappe de fil de renfort 80 peut être formée de fils de renfort parallèles entre eux dans la direction longitudinale, ce qui est le cas général, mais également comprendre des fils de renfort ayant des dispositions particulières par rapport à la direction longitudinale, moyennant l'adoption de moyens de maintien tels que des fils de trame ou tout autre disposition équivalente pour permettre à la nappe de fils de renfort de circuler de manière continue dans l'entrefer des cylindres de la calandre.

De même, on entend ici par caoutchouc toute composition comprenant un mélange plastique d'élastomère, diénique ou pas, non vulcanisé, associé à des charges de renforcement et à d'autres éléments tels que les produits de vulcanisation ou tout autre type de matériaux additifs.

Chacune des feuilles de caoutchouc a une largeur Lₛ supérieure à la largeur L_{f} de la nappe de fils de renfort, faisant apparaître deux lisières latérales respectivement 61, 62 et 71, 72, de largeur Lᵢ, et au droit desquelles il n'y a pas de fils de renfort.

La valeur de l'entrefer e, est ajustée pour que les feuilles de caoutchouc d'épaisseur s remplissent, sous l'effet de la pression, le volume libre disponible entre les fils de renfort. On observe alors que, au droit des lisières, en l'absence du volume des fils de renfort, la pression exercée par les cylindres sur les feuilles de caoutchouc est faible, voire nulle. Il en résulte que la mise en joint des feuilles de caoutchouc au niveau des lisières est de faible qualité, ce qui est susceptible de provoquer des incidents lors de l'opération de découpe des lisières en aval de l'entrefer, comme cela a déjà été indiqué en introduction de la présente demande.

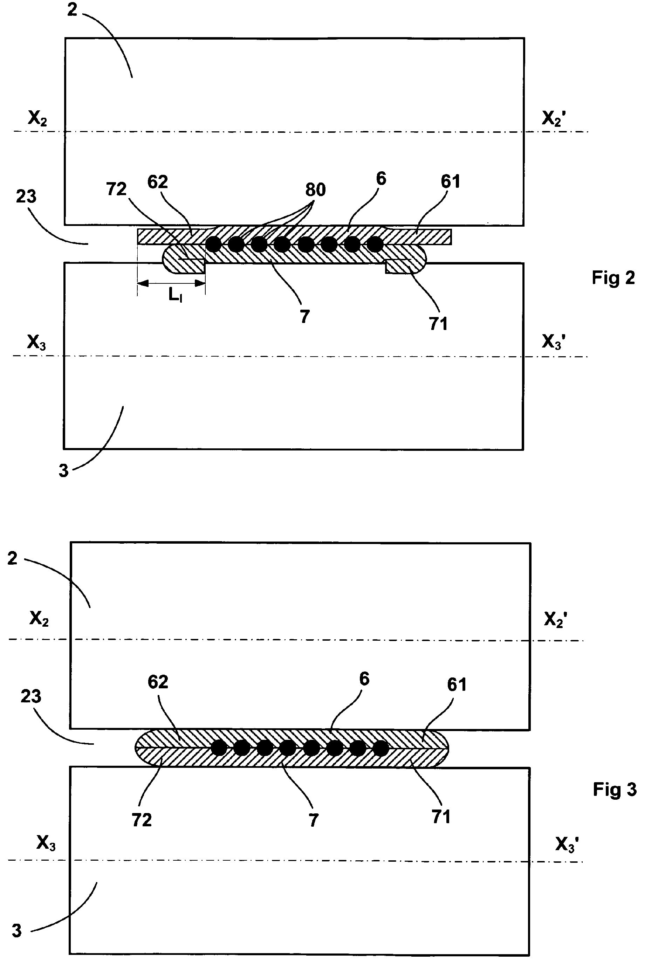

La figure 2 illustre un dispositif de calandrage similaire au dispositif décrit précédemment. Le procédé de mise en oeuvre s'en distingue toutefois en ce que les lisières 71 et 72 de la feuille de caoutchouc inférieure 7 sont repliées sur elles-mêmes et viennent nourrir les volumes placés aux extrémités latérales de la nappe de fils de renfort 80.

La figure 3 illustre la forme générale du composite en aval de l'entrefer, où on observe une bonne mise en joint de la lisière 61 de la feuille de caoutchouc supérieure 61 avec la lisière 71 de la feuille de caoutchouc inférieure 7; et de manière similaire de la lisère 62 avec la lisière 72.

Il est donc nécessaire de prévoir des moyens aptes à replier les lisières sur elles-mêmes en amont de l'entrefer 21.

On pourra adopter des dispositifs de plissage, connus en soi, et formés de rouleaux alignés dans la direction longitudinale et dont les axes forment des angles avec le plan de la nappe variant progressivement de manière à ramener la lisière sur elle-même. Ces dispositifs peuvent toutefois poser des problèmes de centrage lorsque l'on cherche à ajuster précisément la position du repli par rapport à la nappe de fils de renfort.

Aussi, l'objet de l'invention est également de proposer un moyen particulièrement bien adapté permettant de réaliser ce repli des lisières sur elles-mêmes tout en maitrisant la position géométrique des feuilles de caoutchouc par rapport à la nappe de fils de renfort.

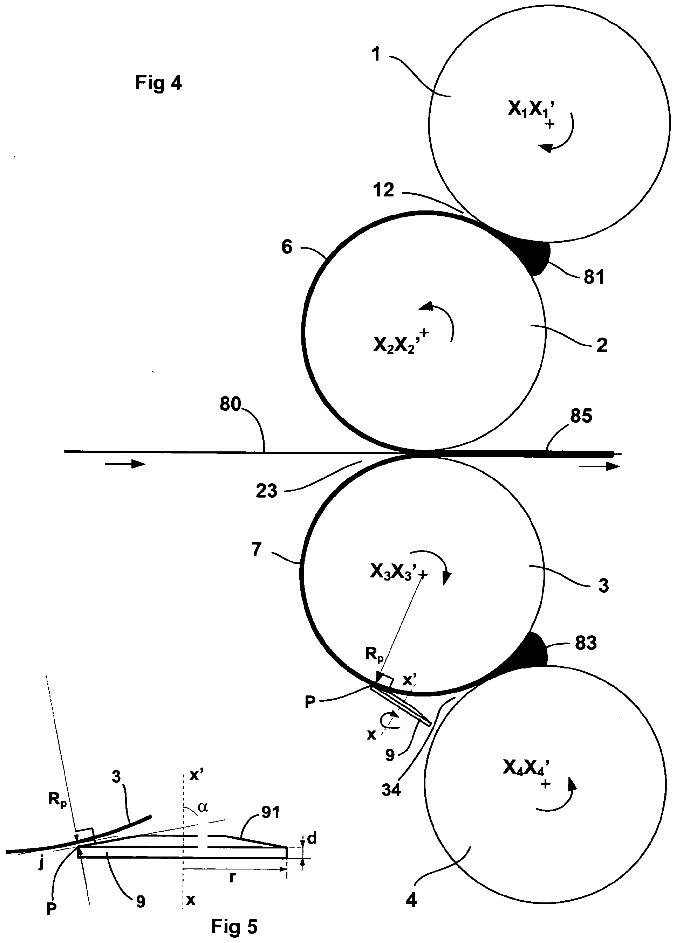

La figure 4 illustre un dispositif comprenant une calandre formée des cylindres 2 et 3 similaire à la calandre illustrée aux figures précédentes. Cette calandre comprend également deux cylindres supplémentaires respectivement les cylindres 1 et 4 d'axes X₁X₁'et X₄X₄' sensiblement parallèles aux axes X₂X₂' et X₃X₃' des cylindres de calandrage 2 et 3. Les cylindres 1 et 4 collaborent respectivement avec les cylindres 2 et 3 avec lesquels ils forment un entrefer supérieur 12 et un entrefer inférieur 34.

Ce dispositif, largement utilisé dans l'industrie, permet de réaliser de manière simultanée la fabrication des feuilles de caoutchouc continues 6 et 7 dans les entrefers supérieur et inférieur 12 et 34, en entrée desquels on place une alimentation continue d'un matériau à base de caoutchouc 81 et 83. La fabrication du produit composite formé de l'assemblage de la nappe de fils de renfort 80 et des feuilles de caoutchouc continues s'opère comme précédemment dans l'entrefer 23 formé par les cylindres de calandrage 2 et 3.

Ce dispositif comprend des disques de retournement 9, disposés axialement de part et d'autre de la feuille de caoutchouc inférieure 7, en aval de l'entrefer 34, et en amont de l'entrefer 23 des cylindres de calandrage

La figure 5 représente une vue détaillée d'un disque de retournement 9, lequel comporte une surface conique 91 dont les génératrices forment un angle donné α par rapport à l'axe de rotation xx' du disque de retournement. L'angle α peut utilement être compris entre 70° et 80°. A titre d'exemple, de bons résultats ont étés obtenus avec un angle α de 78°. La partie cylindrique du disque de retournement a une hauteur d comprise entre 10 mm et 30 mm. Le diamètre du disque peut utilement être compris entre 15 cm et 25 cm. Le disque de retournement étant destiné à entrer en contact avec les lisières formées d'un produit en caoutchouc de faible épaisseur on évitera de faire apparaître des angles vifs entre les différentes faces du disque de retournement.

Comme cela est représenté à la figure 4, l'axe du disque est disposé de sorte que, au niveau du point P radialement distal de la surface conique 91 du disque de retournement 9 et le cylindre 3, la partie radialement distale de la surface conique soit sensiblement tangente à la surface du cylindre de calandrage 3. Au niveau du point P, la génératrice de la surface conique est donc perpendiculaire au rayon Rₚ du cylindre 3 de calandrage.

On s'arrange également pour que l'axe xx' du disque de retournement 9 soit perpendiculaire à l'axe X₃X₃' du cylindre 3.

Les vitesses circonférentielles du cylindre et du disque de retournement au niveau du point P n'étant ni égales ni colinéaires, on évitera autant que faire se peut de mettre le disque de retournement en contact avec la surface du cylindre de calandrage. Cela signifie, comme, cela est illustré à la figure 5, que, au niveau dudit point P, on éloigne la surface conique d'un jeu j, le plus faible possible, compris entre 0,1 mm et 1 mm.

Aussi, il peut s'avérer utile de disposer chaque disque de retournement sur un support mobile (non représenté) dans une direction sensiblement radiale du cylindre de calandrage pour permettre une approche réglable du disque de retournement en direction de la surface dudit cylindre. Dès que le premier contact entre le disque est établi, on active le support d'un léger mouvement en sens opposé sur une distance correspondante au jeu J souhaité. Le même mécanisme d'approche peut également être utilisé pour rendre le système débrayable lorsque son usage n'est pas requis.

De même, ces supports peuvent être mobiles dans une direction axiale, parallèle à l'axe du cylindre de calandrage. L'amplitude du retournement, et conséquemment la position du pli, peuvent alors être facilement ajustés en modifiant la position axiale du disque de retournement ou en jouant sur la vitesse de rotation du disque.

En positionnant le repli au niveau de la demi-largeur de la lisière, comme cela est illustré à la figure 2, on favorise la répartition du matériau caoutchoutique lors de la mise en contact des feuilles de caoutchouc supérieure et inférieure au niveau de l'entrefer 23.

Chaque disque de retournement est animé en rotation autour de son axe xx' par des moyens adaptés (non représentés). La vitesse de rotation du disque peut utilement être ajustée de manière à ce que, au niveau du point P, la vitesse circonférentielle du disque soit au moins supérieure à la vitesse circonférentielle du cylindre.

Le sens de rotation des disques de retournement est déterminé de sorte que, au niveau du point de contact P la vitesse tangentielle du disque soit orientée axialement en direction de l'équateur du cylindre 3.

Pour retourner les lisières, on approche axialement les disques de retournement de chacune des lisières jusqu'à ce que la partie conique 91 vienne soulever le bord de la lisière, de manière à décoller ladite lisière du cylindre de calandrage. Sous l'effet de la rotation du disque de retournement, le bord retourné de la lisière est alors entrainé axialement en direction de l'équateur du cylindre 3.

Les valeurs géométriques décrivant le disque de retournement données ci-dessus sont des valeurs indicatives, et l'homme du métier saura adapter ces paramètres pour faire varier les effets obtenus. Ainsi, en augmentant l'angle α de la surface conique 91, on augmente l'effet de retournement au détriment de l'effet de soulèvement du bord de la lisière. De même, en augmentant le diamètre du disque, à vitesse de rotation constante, ou en augmentant la vitesse de rotation, on augmente la vitesse tangentielle au niveau du point de contact P et on accélère la formation du repli, en veillant toutefois à ne pas détériorer la lisière sous l'effet d'une action trop violente.

Il va de soi que ce dispositif s'avère particulièrement avantageux dans le cas d'une calandre quatre cylindres telle que décrite ci-dessus, mais qu'il est possible de mettre en oeuvre le dispositif de retournement selon l'invention sur une calandre comportant seulement deux cylindres de calandrage en adaptant l'alimentation de la calandre de manière à faire circuler en amont de l'entrefer 23, une des deux feuilles de caoutchouc autour du cylindre de calandrage sur lequel les disques de retournement sont montés.

La description qui précède propose de placer les disques de retournement sur le cylindre 3 de manière à retourner les lisières de la feuille de caoutchouc inférieure 7, mais on obtient évidemment des résultats équivalents en retournant les lisières de la feuille de gomme supérieure. On observera aussi, dans le cas du calandrage de fils de renfort de très fort diamètre il peut s'avérer utile de retourner simultanément les lisières de la feuille inférieure, mais également les lisières de la feuille de caoutchouc supérieure de manière à augmenter l'épaisseur du volume de matière se présentant à l'entrée de l'entrefer 23.

## Revendications

1. Dispositif de calandrage comprenant au moins deux cylindres (3, 4) de calandrage formant un entrefer (23) destiné à recevoir une nappe continue de fils (80) de renfort intercalée entre deux feuilles continues de caoutchouc (6,7), **caractérisé en ce qu'**il comprend en amont de l'entrefer (23) des moyens de retournement (9) aptes à replier sur elles-mêmes les lisières latérales (71, 72) d'au moins une feuille de gomme (7).

2. Dispositif de calandrage selon la revendication 1, dans lequel les moyens de retournement sont formés par des disques de retournement rotatifs (9), installés axialement de part et d'autre de l'équateur d'un cylindre de calandrage (3), chacun des disques de retournement comportant une surface conique (91) dont les génératrices forment un angle donné (α) par rapport à l'axe de rotation (xx') du disque de retournement, et dans lequel ledit disque de retournement est installé de sorte que la partie radialement distale (P) de la surface conique (91) du disque de retournement soit sensiblement tangente à la surface du cylindre de calandrage sans rentrer en contact avec la dite surface.

3. Dispositif selon la revendication 2, dans lequel la distance (j) entre la partie radialement distale du disque de retournement (P) et la surface du cylindre de calandrage est comprise entre 0,1 mm et 1 mm.

4. Dispositif selon l'une des revendications 2 ou 3, dans lequel l'angle (α) formé par les génératrices de la surface conique avec l'axe de rotation du disque de retournement est compris entre 70° et 80°.

5. Dispositif de calandrage selon l'une des revendications 2 à 4, dans lequel le diamètre d'un disque de retournement est compris entre 15 cm et 25 cm.

6. Dispositif selon l'une des revendications 2 à 5, dans lequel l'axe de rotation (xx') d'un disque de retournement est sensiblement perpendiculaire à l'axe de rotation (X₃X₃') du cylindre de calandrage (3).

7. Dispositif de calandrage selon l'une des revendications 1 à 6, dans lequel la position des moyens de retournement est ajustable dans la direction axiale parallèle à l'axe (X₃X₃') des cylindres de calandrage.

8. Dispositif de calandrage selon l'une des revendications 1 à 7, comprenant deux cylindres additionnels (1, 4) coopérant respectivement avec chacun des deux cylindres de calandrage (2, 3) et formant avec chacun de ces cylindres un entrefer supérieur (12) et un entrefer inférieur (34), destinés chacun à réaliser une feuille de caoutchouc en continue, et dans lequel les moyens de retournement (9) sont disposés en aval de l'entrefer supérieur (12) ou inférieur (34).

9. Procédé de calandrage d'une nappe continue de fils de renfort (80) au cours duquel :
- on dispose ladite nappe de fils de renfort entre une feuille supérieure de caoutchouc (6) continue et une feuille inférieure de caoutchouc (7) continue, lesdites feuilles de caoutchouc ayant une largeur (Lₛ) supérieure à la largeur (L_{f}) de la nappe de fils de renforts, de sorte que les deux parties latérales desdites feuilles de caoutchouc non situées au droit de la nappe de fils de renfort forment des lisières (61, 62 et 71, 72)
- on introduit l'ensemble constitué à l'étape précédente dans l'entrefer (23) d'une calandre comprenant au moins deux cylindres (2, 3), de manière à faire pénétrer le caoutchouc dans les espaces entre les fils de renfort,
**caractérisé en ce que**, préalablement à l'introduction de la nappe de fils de renfort et des feuilles de caoutchouc dans l'entrefer (23) de la calandre, on replie sur elles-mêmes les deux lisières (71, 72) d'au moins une des feuilles de caoutchouc (7).

10. Procédé de calandrage selon la revendication 9, dans lequel on forme le pli des lisières (71, 72) au niveau de leurs demi-largeurs respectives.

11. Procédé de calandrage selon l'une des revendications 9 ou 10, dans lequel
- en amont de l'entrefer (23) de la calandre, on fait circuler une feuille de caoutchouc (7) autour d'un des cylindres (3) de calandrage équipé d'un dispositif selon l'une des revendications 2 à 8,
- on approche axialement les disques de retournement (9) en rotation de chacune des lisières (71, 72), de sorte que les lisières sont soulevées par le disque de retournement et se replient sur elles-mêmes en direction de l'équateur du cylindre sous l'effet de la rotation dudit disque de retournement (9).

12. Procédé de calandrage selon la revendication 11, dans lequel les disques de retournement (9) sont animés en rotation de sorte que la vitesse tangentielle au niveau de la partie radialement distale (P) des disques de retournement soit dirigée sensiblement parallèlement à l'axe (X₃X₃') du cylindre (3) en direction de l'équateur dudit cylindre.

13. Procédé de calandrage selon l'une des revendications 11 ou 12, dans lequel les disques de retournement (9) sont animés en rotation de sorte que la vitesse circonférentielle au niveau de la partie radialement distale (P) des disques de retournement soit supérieure à la vitesse circonférentielle dudit cylindre de calandrage (3).

14. Procédé de calandrage selon l'une des revendications 9 à 13, dans lequel, en aval de l'entrefer (23) formé par les cylindres de la calandre (2, 3), on découpe les lisières latérales.

15. Procédé de calandrage selon l'une des revendications 9 à 14, dans lequel la nappe de fils de renfort (80) est constituée par des fils de renfort parallèles entre eux et formant un angle nul avec la direction longitudinale de ladite nappe.

## Patentansprüche

1. Vorrichtung zum Kalandern, aufweisend mindestens zwei Kalanderwalzen (3, 4), welche einen Spalt (23) bilden, der dafür vorgesehen ist, eine kontinuierliche Bahn von Verstärkungsfäden (80), welche zwischen zwei kontinuierlichen Folien aus Kautschuk (6, 7) angeordnet sind, aufzunehmen, **dadurch gekennzeichnet, dass** sie stromaufwärts des Spalts (23) Mittel zum Wenden (9) aufweist, welche geeignet sind, die Seitenkanten (71, 72) mindestens einer Gummifolie (7) übereinander zusammen zu falten.

2. Kalandervorrichtung nach Anspruch 1, bei welcher die Mittel zum Wenden von drehenden Wendescheiben (9) gebildet werden, welche axial beiderseits des Äquators einer Kalanderwalze (3) eingebaut sind, wobei jede der Wendescheiben eine konische Fläche (91) aufweist, deren Mantellinien einen gegebenen Winkel (α) in Bezug auf die Drehachse (xx') der Wendescheibe bilden, und bei der die Wendescheibe derartig eingebaut ist, dass der radial distale Abschnitt (P) der konischen Fläche (91) der Wendescheibe im Wesentlichen tangential zur Fläche der Kalanderwalze verläuft, ohne mit der Fläche in Kontakt zu geraten.

3. Vorrichtung nach Anspruch 2, bei welcher der Abstand (j) zwischen dem radial distalen Abschnitt der Wendescheibe (P) und der Fläche der Kalanderwalze zwischen 0,1 mm und 1 mm liegt.

4. Vorrichtung nach einem der Ansprüche 2 oder 3, bei welcher der Winkel (α), welcher durch die Mantellinien der konischen Fläche mit der Drehachse der Wendescheibe gebildet wird, zwischen 70° und 80° liegt.

5. Kalandervorrichtung nach einem der Ansprüche 2 bis 4, bei welcher der Durchmesser einer Wendescheibe zwischen 15 cm und 25 cm liegt.

6. Vorrichtung nach einem der Ansprüche 2 bis 5, bei welcher die Drehachse (xx') einer Wendescheibe im Wesentlichen senkrecht zur Drehachse (X₃X₃') der Kalanderwalze (3) verläuft.

7. Kalandervorrichtung nach einem der Ansprüche 1 bis 6, bei welcher die Position der Wendemittel in der axialen Richtung parallel zur Achse (X₃X₃') der Kalanderwalzen einstellbar ist.

8. Kalandervorrichtung nach einem der Ansprüche 1 bis 7, aufweisend zwei zusätzliche Walzen (1, 4), welche jeweils mit jeder der beiden Kalanderwalzen (2, 3) zusammenwirken und mit jeder dieser Walzen einen oberen Spalt (12) und einen unteren Spalt (34) bilden, welcher jeder dafür vorgesehen ist, eine Folie aus Kautschuk zu bewerkstelligen, und bei welcher die Mittel zum Wenden (9) stromabwärts vom oberen (12) oder unteren (34) Spalt angeordnet sind.

9. Verfahren zum Kalandern einer kontinuierlichen Bahn aus Verstärkungsfäden (80) in dessen Verlauf:
die Bahn aus Verstärkungsfäden zwischen eine obere, kontinuierliche Folie aus Kautschuk (6) und eine untere, kontinuierliche Folie aus Kautschuk (7) angeordnet wird, wobei die Folien aus Kautschuk eine Breite (Lₛ) besitzen, welche größer als die Breite (L_{f}) der Bahn aus Verstärkungsfäden ist, derartig, dass die beiden seitlichen Abschnitte der Folien aus Kautschuk, welche sich nicht gegenüber der Bahn aus Verstärkungsfäden befinden, Kanten (61, 62 und 71, 72) bilden,
die im vorhergehenden Schritt gebildete Gesamtheit in den Spalt (23) eines Kalanders eingeführt wird, welcher mindestens zwei Walzen (2, 3) aufweist, um den Kautschuk in die Räume zwischen den Verstärkungsfäden eindringen zu lassen,
**dadurch gekennzeichnet, dass** vor dem Einführen der Bahn aus Verstärkungsfäden und der Folien aus Kautschuk in den Spalt (23) des Kalanders die Kanten (71, 72) von mindestens einer der Folien aus Kautschuk (7) übereinander zusammen gefaltet werden.

10. Verfahren zum Kalandern nach Anspruch 9, bei welchem die Falte der Kanten (71, 72) im Bereich ihrer jeweiligen halben Breiten gebildet wird.

11. Verfahren zum Kalandern nach einem der Ansprüche 9 oder 10, bei welchem
man stromaufwärts des Spalts (23) des Kalanders eine Folie aus Kautschuk (7) um eine der Kalanderwalzen (3) sich bewegen lässt, welche mit einer Vorrichtung nach einem der Ansprüche 2 bis 8 ausgerüstet ist,
die Wendescheiben (9) axial in Drehung jeder der Kanten (71, 72) derartig näher gebracht werden, dass die Kanten durch die Wendescheibe angehoben werden und sich auf sich selbst in Richtung des Äquators der Walze unter der Einwirkung der Drehung der Wendescheibe (9) zusammenfalten.

12. Verfahren zum Kalandern nach Anspruch 11, bei welchem die Wendescheiben (9) derartig in Drehung versetzt werden, dass die Tangentialgeschwindigkeit im Bereich des radial distalen Abschnitts (P) der Wendescheiben im Wesentlichen parallel zur Achse (X₃X₃') der Walze (3) in Richtung des Äquators der Walze gerichtet wird.

13. Verfahren zum Kalandern nach einem der Ansprüche 11 oder 12, bei welchem die Wendescheiben (9) derartig in Drehung versetzt werden, dass die Umfangsgeschwindigkeit im Bereich des radial distalen Abschnitts (P) der Wendescheiben größer als die Umfangsgeschwindigkeit der Kalanderwalze (3) ist.

14. Verfahren zum Kalandern nach einem der Ansprüche 9 bis 13, bei welchem stromabwärts des von den Kalanderwalzen (2, 3) gebildeten Spalts (23) die Seitenkanten geschnitten werden.

15. Verfahren zum Kalandern nach einem der Ansprüche 9 bis 14, bei welchem die Bahn aus Verstärkungsfäden (80) von Verstärkungsfäden gebildet wird, welche untereinander parallel sind und einen Winkel von Null mit der longitudinalen Richtung der Bahn bilden.

## Claims

1. Calendering device comprising at least two calendering rolls (3, 4) forming a nip (23) intended to accept a continuous ply of reinforcing threads (80) which is interposed between two continuous sheets of rubber (6,7), **characterized in that** it comprises, upstream of the nip (23), turnup means (9) able to turn the lateral selvedges (71, 72) of at least one sheet of rubber (7) up onto themselves.

2. Calendering device according to Claim 1, in which the turnup means are formed of rotary turnup discs (9) installed axially on each side of the equator of a calendering roll (3), each of the turnup discs comprising a conical surface (91), the generatrix of which form a given angle (α) with respect to the axis of rotation (xx') of the turnup disc, and in which the said turnup disc is installed in such a way that the radially distal part (P) of the conical surface (91) of the turnup disc is substantially tangential to the surface of the calendering roll without coming into contact with the said surface.

3. Device according to Claim 2, in which the distance (j) between the radially distal part of the turnup disc (P) and the surface of the calendering roll is comprised between 0.1 mm and 1 mm.

4. Device according to one of Claims 2 and 3, in which the angle (α) formed by the generatrix of the conical surface with the axis of rotation of the turnup disc is comprised between 70° and 80°.

5. Calendering device according to one of Claims 2 to 4, in which the diameter of a turnup disc is comprised between 15 cm and 25 cm.

6. Device according to one of Claims 2 to 5, in which the axis of rotation (xx') of a turnup disc is substantially perpendicular to the axis of rotation (X₃X₃') of the calendering roll (3).

7. Calendering device according to one of Claims 1 to 6, in which the position of the turnup means can be adjusted in the axial direction parallel to the axis (X₃X₃') of the calendering rolls.

8. Calendering device according to one of Claims 1 to 7, comprising two additional rolls (1, 4) respectively collaborating with each of the two calendering rolls (2, 3) and forming, with each of these rolls, an upper nip (12) and a lower nip (34), each intended to create a sheet of rubber continuously, and in which the turnup means (9) are positioned downstream of the upper nip (12) or lower nip (34).

9. Method of calendering the continuous ply of reinforcing threads (80), during which:
- said ply of reinforcing threads is positioned between a continuous upper sheet of rubber (6) and a continuous lower sheet of rubber (7), said sheets of rubber having a width (Lₛ) greater than the width (L_{f}) of the ply of reinforcing threads, so that the two lateral parts of said sheets of rubber which are not vertically aligned with the ply of reinforcing threads form selvedges (61, 62 and 71, 72)
- the assembly formed in the preceding step is introduced into the nip (23) of a calender comprising at least two rolls (2, 3), so as to cause the rubber to penetrate the spaces between the reinforcing threads,
**characterized in that**, prior to the ply of reinforcing threads and the sheets of rubber being introduced into the nip (23) of the calender, the two selvedges (71, 72) of at least one of the sheets of rubber (7) are turned up on themselves.

10. Calendering method according to Claim 9, in which the fold in the selvedges (71, 72) is formed halfway across the respective width thereof.

11. Calendering method according to one of Claims 9 or 10, in which
- upstream of the nip (23) of the roll a sheet of rubber (7) is passed around one of the calendering rolls (3) equipped with a device according to one of Claims 2 to 8,
- the rotating turnup discs (9) are brought axially closer to each of the selvedges (71, 72), so that the selvedges are lifted up by the turnup disc and folded over on themselves towards the equator of the roll under the effect of the rotating of the said turnup disc (9).

12. Calendering method according to Claim 11, in which the turnup discs (9) are rotationally driven in such a way that the tangential velocity at the radially distal part (P) of the turnup discs is directed substantially parallel to the axis (X₃X₃') of the roll (3) in the direction of the equator of the said roll.

13. Calendering method according to either of Claims 11 and 12, in which the turnup discs (9) are rotationally driven in such a way that the circumferential velocity at the radially distal part (P) of the turnup discs is greater than the circumferential velocity of the said calendering roll (3).

14. Calendering method according to one of Claims 9 to 13, in which, downstream of the nip (23) formed by the rolls of the calender (2, 3), the lateral selvedges are cut.

15. Calendering method according to one of Claims 9 to 14, in which the ply of reinforcing threads (80) is made up of reinforcing threads that are parallel to one another and make a zero angle with the longitudinal direction of the said ply.
